# EUROPEAN PATENT SPECIFICATION

(11) **EP 0 716 553 B1**
(45) Date of publication and mention of the grant of the patent: **14.01.2004**
(21) Application number: 95118844.0
(22) Date of filing: 30.11.1995
(51) Int. Cl.: H04Q 7/18, G08B 5/22, H04Q 7/14

(54) **Pager for wireless control and method therefor**
Funkrufgerät zur drahtlosen Steuerung und Verfahren dafür
Récepteur d'appel radio pour la commande sans fil et procédé associé

(30) Priority: 05.12.1994 US 349597
(43) Date of publication of application: 12.06.1996
(73) Proprietor: MOTOROLA, INC., Schaumburg, IL 60196 (US)
(72) Inventor: Moughanni, Claude, Austin, Texas 78748 (US); Ho, Yui Kaye, Austin, Texas 78746 (US)
(74) Representative: Hudson, Peter David

(56) References cited:
- EP-A- 0 547 725
- WO-A-94/13092
- US-A- 5 113 427

## Description

### Field of the Invention

This invention relates generally to a wireless control, and more particularly to wireless control using a paging input.

### Background of the Invention

Pagers and paging systems are widespread and rampantly used in our increasingly mobile society. Pagers are generally used to enable families, friends, and co-workers to be readily accessible to one another. Access is only a telephone call away. As technology has grown, pagers have evolved from providing only telephone numbers to providing much more complex alphanumeric messages and are even capable of accessing services which provide stock market reports and the like. However, due to restrictions in size, pagers are often not capable of executing more complex functions such as controlling operation of devices or communicating large amounts of data.

In situations which require the execution of more complex functions, modems or other devices must be used. For example, U.S. Patent 4,914,686 discloses a unique method by which a low cost cordless telephone is used to enable remote data logging and a wireless read of data in a remote or hostile environment. Generally, however, these applications are require a significant amount of circuitry and are complex and costly to implement. Certainly, the use of modems and cordless telephones is too costly to implement for most consumer applications. Therefore, in light of current technology, a need remains for a lost cost and effective solution for provided remote control of common consumer applications.

US 5113 427 discloses a radio-signal-responsive vehicle device control system including a receiver unit for receiving a radio signal generated based on a signal transmitted from a calling telephone unit and for generating a detectable signal based on the received radio signal, receiver unit storage structure mounted in a motor vehicle for storing the receiver unit, a detector for producing a detected signal in response to detection of the detectable signal from the receiver unit, a control unit responsive to the detected signal from the detector for producing a control signal based on at least the detectable signal, and an actuator for controlling at least one device in the motor vehicle based on the control signal from the control unit. The vehicle device control system allows the vehicle device to be remotely controlled through a simple and low-cost arrangement, making it possible for a vehicle radio telephone unit with no reception capability to receive and transmit a signal.

### Summary of the Invention

The previously mentioned needs are fulfilled with the present invention.

According to a first aspect of the present invention, there is provided a data processing system as claimed in claim 1.

According to a second aspect of the present invention, there is provided a method for providing remote control using a pager as claimed in claim 5.

These and other features, and advantages, will be more clearly understood from the following detailed description taken in conjunction with the accompanying drawings. It is important to note the drawings are not intended to represent the only form of the invention.

### Brief Description of the Drawings

FIG. 1 illustrates in block diagram form a paging communication system in accordance with the present invention;
FIG. 2-1 illustrates in flow chart form a first series of steps executed by a command processing unit of the paging communication system of FIG. 1;
FIG. 2-2 illustrates in f low chart form a second series of steps executed by the command processing unit of the paging communication system of FIG. 1;
FIG. 3 illustrates a first paging synchronization and communication protocol; and
FIG. 4 illustrates a second paging synchronization and communication protocol.

### Detailed Description of a Preferred Embodiment

The present invention provides a data processing system and method for allowing a wireless paging device to control electronic equipment at a remote location. The data processing system includes a receiver such as those typically used in pagers to detect when a particular electronic device is being remotely accessed. If the electronic device is being remotely accessed, the data processing system stores an incoming message in a buffer and subsequently determines if the incoming message is a command or another type of communication. The data processing system will process a command to provide the proper control signals to enable the electronic device to function in a preselected manner.

Conceivably, the present invention may be applied to allow remote access to thermostats, cars, televisions, and almost all household appliances which use electronic circuits for control. For example, the present invention will allow a person who is working at a distant job site to page a thermostat at their house and dial in a first command to turn on the heater or air conditioner and a second command which specifies a temperature. This same person may also use the present invention to remotely enable and program their video recorder, to turn off an iron accidentally left on, or to enable a heater in their car so that it heats up before they must drive home. In a society of ever-increasing mobility and complexity, such a device will provide an immediate link with a home or a car and any electronic devices therein.

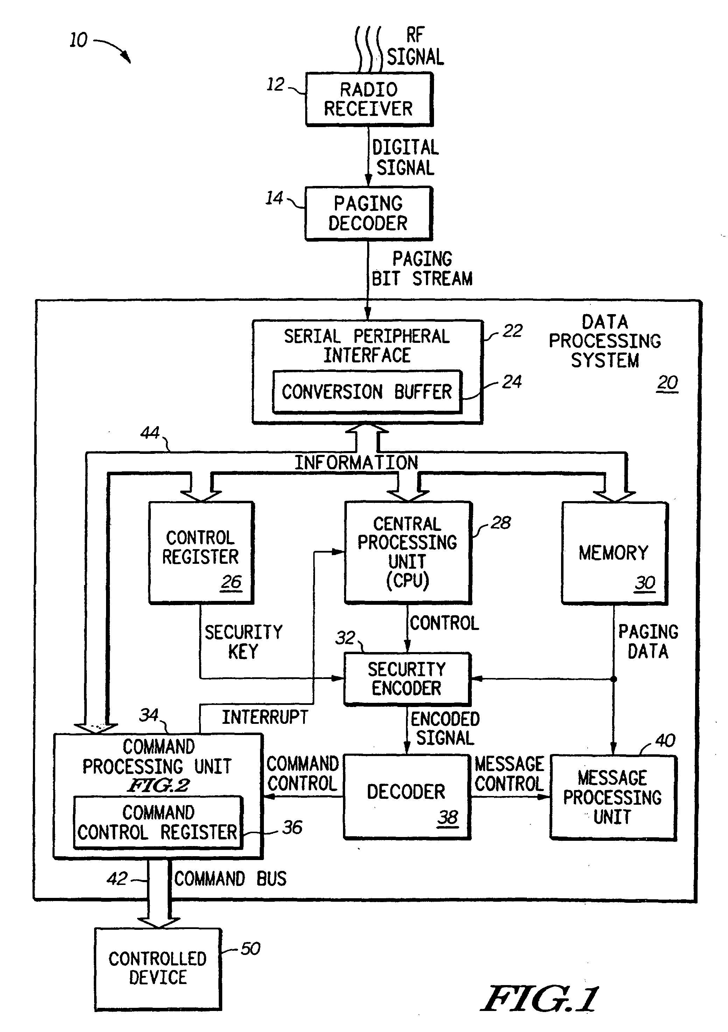

Furthermore, the present invention may be easily incorporated within such electronic devices. The present embodiment of the invention requires a relatively small amount of circuitry to allow for the previously described functionality. FIG. 1 illustrates a paging communication system 10 of the present embodiment of the invention in greater detail.

Paging communication system 10 includes a radio receiver 12, a paging decoder 14, a serial peripheral interface 22 which includes a conversion buffer 24, a control register 26, a central processing unit (CPU) 28, a memory 30, a security encoder 32, a command processing unit 34, a decoder 38, a message processing unit 40, and a controlled device 50. Command processing unit 34 includes a command control register 36.

A RF signal is provided to radio receiver 12. Radio receiver 12 is coupled to paging decoder 14 to provide a Digital Signal. Paging decoder 14 provides a Paging Bit Stream signal to serial peripheral interface 22. Serial peripheral interface 22 is coupled to control register 26, CPU 28, memory 30, and command processing unit 34 via an Information bus 44. Control register 26 is coupled to security encoder 32 via a Security Key signal. CPU 28 is coupled to security encoder 32 via a Control signal. Memory 30 is coupled to both security encoder 32 and message processing unit 40 to provide a Paging Data signal. Security encoder 32 is coupled to decoder 38 to provide an Encoded signal. Decoder 38 is coupled to message processing unit 40 to provide a Message Control signal. Decoder 38 is also coupled to command processing unit 34 to provide a Command Control signal. Command processing unit 34 is coupled to CPU 28 to provide an Interrupt signal. Command processing unit 34 is also coupled to controlled device 50 via a Command bus 42.

During a following description of the implementation of the invention, the terms "assert" and "negate," and various grammatical forms thereof, are used to avoid confusion when dealing with a mixture of "active high" and "active low" logic signals. "Assert" is used to refer to the rendering of a logic signal or register bit into its active, or logically true, state. "Negate" is used to refer to the rendering of a logic signal or register bit into its inactive, or logically false state.

### General Description of Operation

During operation, the RF signal is provided to radio receiver 12. Radio receiver 12 is implemented in each electronic device which will be used in conjunction with the present invention and is provided to detect a paging signal. Transmission of paging information using RF signals is well known in the data processing art and will not be described in greater detail herein. When radio receiver 12 receives the RF signal, radio receiver 12 converts the signal to a digital bit stream referred to as the Digital signal in FIG. 1. Paging decoder converts the digital bit stream of the Digital signal to a paging protocol. The paging protocol is then transferred to serial peripheral interface 22 via the Paging Bit Stream signal.

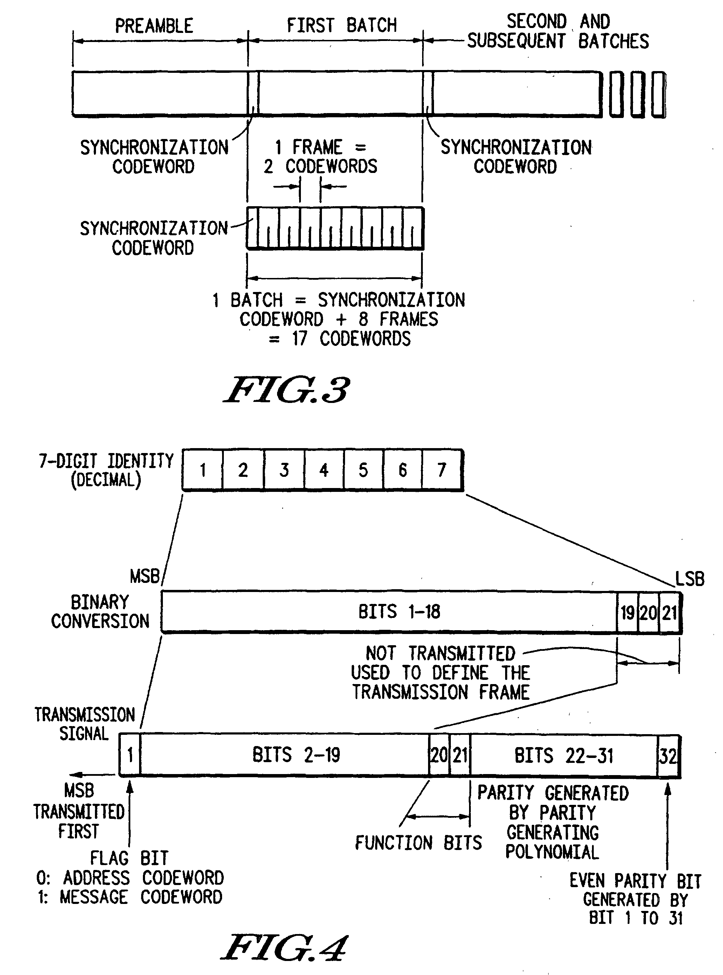

In the embodiment of the invention described herein, a paging protocol such as POCSAG is used. While the POCSAG protocol is a current digital message paging standard, it should be understood that any protocol may be used in conjunction with the present invention. FIG. 3 illustrates a typical signal in a POCSAG format. In the POCSAG protocol, the transmission of data consists of a preamble followed by batches of complete codewords. The preamble of the data stream protocol is provided at a beginning of a block of data to give notice to paging decoder 14 that a POCSAG signal is being received. Paging decoder 14 may then use the preamble to synchronize to the timing of the transmitted data. Furthermore, each batch begins with a synchronization codeword and includes eight frames of information. Therefore, each batch includes seventeen codewords. During operation, data processing system 20 will only examine data in a predetermined frame identified by paging decoder 14.

Data in the POCSAG format is transmitted to paging decoder 14. Bits 1 through 18 indicate address information and bits 19 through 21 indicate a transmission frame for each frame of data in the block of transmitted information in FIG. 4. Binary address bits 1 through 18 are decoded and compared with a seven digit identity value previously programmed into paging decoder 14. FIG. 4 illustrates the seven digit decimal identity value which is programmed into paging decoder 14 and which is used to indicate a frame to be accessed. When the frame transmitted by the Digital signal corresponds to the identity value programmed into paging decoder 14, corresponding address bits are received and decoded. It should be noted that paging decoder 14 may be implemented as a hardware circuit which specifically performs POCSAG decoding or may be implemented using software and a general purpose microcontroller.

Included within the converted address bits is a flag bit which typically indicates if a remaining portion of the transmitted data is an address codeword or a message codeword. Address or message information as indicated by a logic value of the flag bit subsequently follows. Two function bits are then provided to indicate a message type. As with frame identification, paging decoder 14 is programmed to determine a meaning of the function bits. In one embodiment of the present embodiment of the invention, the function bits may be used to indicate if an incoming page signal is a control message which will access an electronic device and subsequently modify the device's operation.

After receiving the Digital Signal, paging decoder 14 decodes it to provide the Paging Bit Stream signal in the format illustrated in FIG. 4. The Paging Bit Stream signal is subsequently provided to serial peripheral interface 22. Upon receipt of the Paging Bit Stream Signal, serial peripheral interface 22 stores bits 1 through 21 in conversion buffer 24. CPU 28 enables conversion buffer 24 to provide address bits 1 through 21 and the information stored therein to memory 30 via Information bus 44.

CPU 28 may then access the stored information values from memory 30 to determine if the paging transmission was a command or a message. CPU 28 may perform this function using one of two methods. In a first method, previously alluded to, the function bits in the incoming message may be used to indicate whether the information is a command operation or an incoming message. In a second method, data embedded within the information may be accessed to indicate whether the paging transmission is a command or a message. Each of these methods will subsequently be discussed in greater detail.

When information indicating whether an incoming message is a command operation or an incoming message, the function code bits, bits 20 and 21, are provided to CPU 28. CPU 28 processes the function code bits to indicate a type of command operation which is received and provides the appropriate data, address, and control information to command processing unit 34. Because there are two function code bits in this implementation of the invention, three different types of commands may be provided to controlled device 50 by data processing system 20. These three types of commands might enable controlled device 50 to perform three different functions or may be used to control controlled device 50 as well as two other electronic devices (not shown herein).

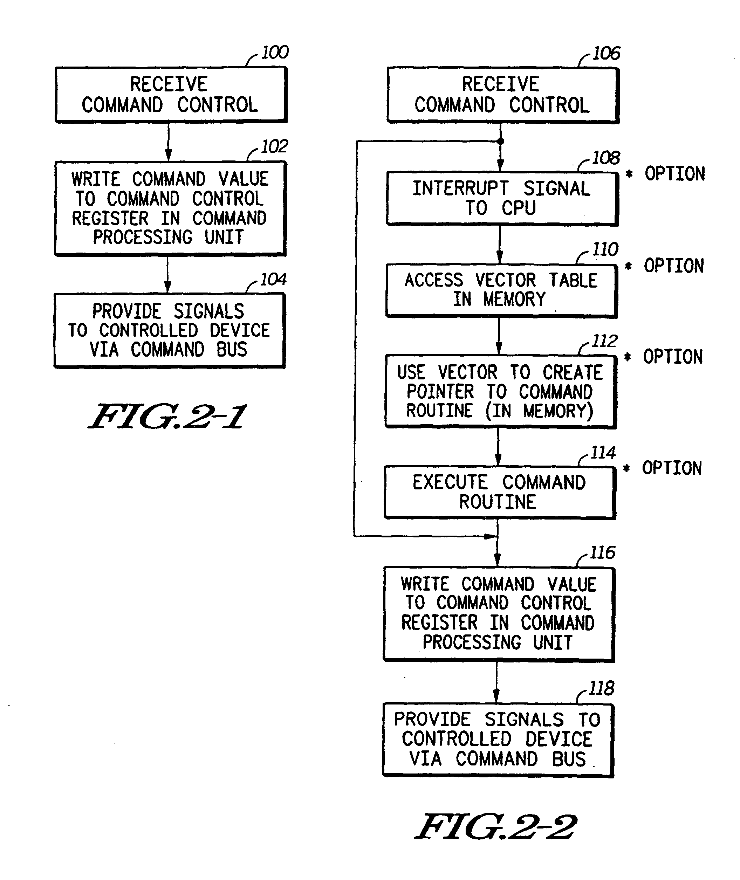

Command processing unit 34 interprets the command operation provided thereto by CPU 28 to provide a plurality of external control signals to controlled device 50 via Command bus 42. Control of command processing unit 34 is determined based on a programmed value stored in command control register 36. An external user or an device internal to data processing system 20 may program command control register 36 such that command processing unit 34 operates in a preselected fashion. After receipt of the plurality of external control signals, controlled device 50 will perform a function identified by command processing unit 34 and the function bits of the information value. Furthermore, after the plurality of external control signals are provided to controlled device 50, command processing unit 34 generates the Interrupt signal to indicate to CPU 28 that data processing system 20 has executed a control function using remotely transmitted control information. This mode of operation is summarized in FIG. 2-A.

In a second mode of operation, data embedded within the transmitted paging message may be accessed to indicate whether the paging transmission is a command or a message. Command processing unit 34 provides the Interrupt signal to CPU 28 when the embedded data is detected. Subsequently, the information received as a result of the paging transmission is provided to control register 26. If preselected bits of the transmitted data correspond to a value stored in control register 26, control register 26 provides the Security Key signal. It should be noted that the value stored in control register 26 is stored therein prior to execution of a paging command operation. Furthermore, CPU 28 asserts the Control signal to indicate that a paging operation, either a command or a message operation, should be executed.

When the Control signal is asserted, security encoder 32 concatenates a key value transferred via the Security Key signal with a portion of the information received in the Paging Bit_{.} Stream signal and transferred by the Paging Data signal. A concatenated value is transferred via the Encoded signal to decoder 38. Decoder 38 subsequently decodes the encoded signal to determine if the concatenated value indicates the paging transmission specified a command operation or a message operation. If the concatenated value indicates the paging transmission specified the message operation, the Message Control signal is asserted to message processing unit 40. Message processing unit 40 subsequently interprets the paging data and provides the data in a format which may be accessed by an external user.

However, if the concatenated value indicates the paging transmission specified the command operation, the Command Control signal is written to command control register 36. Command control register 36 then enables command processing unit 34 to interpret the Command Control signal to generate the plurality of external control signals used to control operation of controlled device 50. The second mode of operation is summarized in FIG. 2-B.

The present invention may be applied to allow remote access to thermostats, cars, televisions, and almost all household appliances which use electronic circuits for control. For example, the present invention will allow a person who is working at a distant job site to page a thermostat at their house and dial in a first command to turn on the heater or air conditioner and a second command which specifies a temperature. This same person may also use the present invention to remotely enable and program their video recorder or to turn off an iron accidentally left on. The present invention may also be used to allow a person to remotely enable a heater in their car so that it heats up before they must drive home or remotely disable an engine of a stolen automobile. Furthermore, areas which are hazardous, remote, or underdeveloped may also be easily accessed using the technology disclosed in the present patent application. Indeed, the applications for such an invention are as varied as the types of products which are electronically controlled. In a society of ever-increasing mobility and complexity, such a device will provide an immediate link with a home or a car and any electronic devices therein.

The present invention provides a unique method of using wireless paging technology to access electronic devices at remote locations. This present invention uses existing paging infrastructures and protocols to perform new operations with a minimal amount of additional circuitry. Additionally, the implementation of the invention described herein is provided by way of example only. However, many other implementations may exist for executing the function described herein. For example, more function bits may ultimately be used to identify different types of commands. Additionally, decoder 38 may be implemented using either hardware or software.

While there have been described herein the principles of the invention, it is to be clearly understood to those skilled in the art that this description is made only by way of example and not as a limitation to the scope of the invention. Accordingly, it is intended, by the appended claims, to cover all modifications of the invention which fall within the true scope of the invention.

## Claims

1. A data processing system (10), comprising:
a receiver (12) for receiving a paging input in a first format, the receiver translating the paging input to a second format; a paging decoder (14) coupled to the receiver for receiving the paging input in the second format, the paging decoder decoding the paging input in the second format to provide a paging bit stream signal; and
a data processor (20) comprising:
an interface (22) for receiving the paging bit stream;
a central processing unit (28) for providing a control signal in response to the paging bit stream, the central processing unit (28) coupled to the interface (22) for receiving the paging bit stream;
the data processing system (10) **characterized by**:
a control register (26) coupled to the interface for receiving the paging bit stream, the control register providing a security key in response to a first portion of the paging bit stream;
a memory (30) for storing a second portion of the paging bit stream, the memory coupled to the interface for receiving the paging bit stream;
a security encoder (32) coupled to the control register for receiving the security key, the central processing unit for receiving a central control signal, and the memory for receiving the second portion of the paging bit stream, the security encoder for encoding the second portion of the paging bit stream and the security key to generate an encoded signal;
a decoder (38) for decoding the encoded signal to selectively provide a command control signal; and
a command processing unit (34) coupled to the interface for receiving the paging bit stream and coupled to the decoder for receiving the command control signal, the command processing unit (34) for selectively generating plurality of external command signals in
response to the command control signal, the plurality of external command signals providing external control of the functionality of an external device.

2. The data processing system of claim 1 wherein the paging input in the first format includes a control value embedded in the paging bit stream.

3. The data processing system of claim 2 wherein the security encoder (32) is adapted to selectively generate the command control signal in response to the control value embedded in the paging bit stream.

4. The data processing system of claim 1 wherein the security encoder (32) is adapted to generate the encoded signal by concatenating the security key with the second portion of the paging bit stream.

5. A method for providing remote control using a pager, comprising the steps of, comprising:
providing a receiver (12) for receiving a paging input in a first format, the receiver translating the paging input to a second format;
coupling a paging decoder (14) to the receiver to receive the paging input in the second format, the paging decoder decoding the paging input in the second format to provide a paging bit stream signal;
providing an interface (22) for receiving the paging bit stream;
providing a central processing unit (28) to provide a control signal in response to the paging bit stream, the central processing unit (28) coupled to the interface (22) for receiving the paging bit stream;
the method **characterized by**:
coupling a control register (26) to the inter-face for receiving the paging bit stream, the control register providing a security key in response to a first portion of the paging bit stream;
providing a memory (30) for storing a second portion of the paging bit stream, the memory coupled to the interface for receiving the paging bit stream;
coupling a security encoder (32) to the control register for receiving the security key, the central processing unit for receiving a central control signal, and the memory for receiving the second portion of the paging bit stream, the security encoder encoding the second portion of the paging bit stream and the security key to generate an encoded signal;
providing a decoder (38) for decoding the encoded signal to selectively provide a command control signal; and
coupling a command processing unit (34) to the interface for receiving the paging bit stream and coupled to the decoder for receiving the command control signal, the command processing selectively generating plurality of external command signals in
response to the command control signal, the plurality of external command signals providing external control of the functionality of an external device,

## Patentansprüche

1. Datenverarbeitungssystem (10), das umfasst:
einen Empfänger (12) zum Empfangen einer Funkrufeingabe in einem ersten Format, wobei der Empfänger die Funkrufeingabe in ein zweites Format umsetzt; einen zum Empfangen der Funkrufeingabe in einem zweiten Format an den Empfänger gekoppelter Funkrufdecoder (14), wobei der Funkrufdecoder die Funkrufeingabe in dem zweiten Format decodiert, um ein Funkruf-Bitstromsignal bereitzustellen; und
einen Datenprozessor (20), der umfasst:
eine Schnittstelle (22) zum Empfangen des Funkruf-Bitstroms;
eine zentrale Verarbeitungseinheit (28) zum Liefern eines Steuerungs-/Regelungs-Signals in Abhängigkeit von dem Funkruf-Bitstrom, wobei die zentrale Verarbeitungseinheit (28) zum Empfangen des Funkruf-Bitstroms an die Schnittstelle (22) gekoppelt ist;
wobei das Datenverarbeitungssystem (10) durch Folgendes **gekennzeichnet** ist:
ein zum Empfangen des Funkruf-Bitstroms an die Schnittstelle gekoppeltes Steuerungs-/Regelungs-Register (26), wobei das Steuerungs-/Regelungs-Register in Abhängigkeit von einem ersten Bereich des Funkruf-Bitstroms einen Sicherheitscodeschlüssel bereitstellt;
einen Speicher (30) zum Speichern eines zweiten Bereichs des Funkruf-Bitstroms, wobei der Speicher zum Empfangen des Funkruf-Bitstroms an die Schnittstelle gekoppelt ist;
einen Sicherheitscodierer (32), der zum Empfangen des Sicherheitscodeschlüssels an das Steuerungs-/Regelungs-Register, zum Empfangen eines zentralen Steuerungs/Regelungs-Signals an die zentrale Verarbeitungseinheit und zum Empfangen des zweiten Bereichs des Funkruf-Bitstroms an den Speicher gekoppelt ist, wobei der Sicherheitscodierer zum Codieren des zweiten Bereichs des Funkruf-Bitstroms und des Sicherheitscodeschlüssels vorgesehen ist, um ein codiertes Signal zu erzeugen;
einen Decoder (38) zum Decodieren des codierten Signals, um selektiv ein Befehls-Steuerungs-/Regelungs-Signal bereitzustellen, und
eine Befehlsverarbeitungseinheit (34), die zum Empfangen des Funkruf-Bitstroms an die Schnittstelle gekoppelt ist und zum Empfangen des Befehls-Steuerungs-/Regelungs-Signals an den Decoder gekoppelt ist, wobei die Befehlsverarbeitungseinheit (34) zum selektiven Erzeugen einer Mehrzahl externer Befehlssignale in Abhängigkeit von dem Befehls-Steuerungs-/Regelungs-Signal vorgesehen ist, wobei die Mehrzahl externer Befehlssignale eine externe Steuerung/Regelung der Funktionalität eines externen Geräts bereitstellt.

2. Datenverarbeitungssystem nach Anspruch 1, wobei die Funkrufeingabe in dem ersten Format einen in dem Funkruf-Bitstrom integrierten Steuerungs-/Regelungs-Wert enthält.

3. Datenverarbeitungssystem nach Anspruch 2, wobei der Sicherheitscodierer (32) geeignet ist, das Befehls-Steuerungs-/Regelungs-Signal in Abhängigkeit von dem in dem Funkruf-Bitstrom integrierten Steuerungs-/Regelungs-Wert selektiv zu erzeugen.

4. Datenverarbeitungssystem nach Anspruch 1, wobei der Sicherheitscodierer (32) geeignet ist, das codierte Signal durch Verknüpfen des Sicherheitscodeschlüssels mit dem zweiten Bereich des Funkruf-Bitstroms selektiv zu erzeugen.

5. Verfahren zur Bereitstellung einer Fernsteuerung/regelung unter Verwendung eines Funkrufgeräts, mit den Schritten:
Bereitstellen eines Empfängers (12) zum Empfangen einer Funkrufeingabe in einem ersten Format, wobei der Empfänger die Funkrufeingabe in ein zweites Format umsetzt;
Koppeln eines Funkrufdecoders (14) an den Empfänger zum Empfangen der Funkrufeingabe in dem zweiten Format, wobei der Funkrufdecoder die Funkrufeingabe in dem zweiten Format decodiert, um ein Funkruf-Bitstromsignal bereitzustellen;
Bereitstellen einer Schnittstelle (22) zum Empfangen des Funkruf-Bitstroms;
Bereitstellen einer zentralen Verarbeitungseinheit (28), um in Abhängigkeit von dem Funkruf-Bitstrom ein Steuerungs-/Regelungs-Signal bereitzustellen, wobei die zentrale Verarbeitungseinheit (28) zum Empfangen des Funkruf-Bitstroms an die Schnittstelle (22) gekoppelt ist;
wobei das Verfahren **gekennzeichnet ist durch**:
Koppeln eines Steuerungs-/Regelungs-Registers (26) an die Schnittstelle zum Empfangen des Funkruf-Bitstroms, wobei das Steuerungs-/Regelungs-Register in Abhängigkeit von einem ersten Bereich des Funkruf-Bitstroms einen Sicherheitscodeschlüssel bereitstellt;
Bereitstellen eines Speichers (30) zum Speichern eines zweiten Bereichs des Funkruf-Bitstroms, wobei der Speicher zum Empfangen des Funkruf-Bitstroms an die Schnittstelle gekoppelt ist;
Koppeln eines Sicherheitscodierers (32) an das Steuerungs-/Regelungs-Register zum Empfangen des Sicherheitscodeschlüssels, an die zentrale Verarbeitungseinheit zum Empfangen eines zentralen Steuerungs-/Regelungs-Signals und an den Speicher zum Empfangen des zweiten Bereichs des Funkruf-Bitstroms, wobei der Sicherheitscodierer den zweiten Bereich des Funkruf-Bitstroms und den Sicherheitscodeschlüssel codiert, um ein codiertes Signal zu erzeugen;
Bereitstellen eines Decoders (38) zum Decodieren des codierten Signals, um selektiv ein Befehls-Steuerungs/Regelungs-Signal bereitzustellen; und
Koppeln einer Befehlsverarbeitungseinheit (34) an die Schnittstelle zum Empfangen des Funkruf-Bitstroms, die an den Decoder gekoppelt ist, zum Empfangen des Befehls-Steuerungs-/Regelungs-Signals, wobei die Befehlsverarbeitungseinheit** in Abhängigkeit von dem Befehls-Steuerungs/Regelungs-Signal selektiv eine Mehrzahl externer Befehlssignale erzeugt, wobei die Mehrzahl externer Befehlssignale eine externe Steuerung/Regelung der Funktionalität eines externen Geräts bereitstellt.

## Revendications

1. Système (10) de traitement de données, comprenant:
un récepteur (12) destiné à recevoir une entrée de radiomessagerie dans un premier format, le récepteur traduisant l'entrée de radiomessagerie en un second format ; un décodeur (14) de radiomessagerie raccordé au récepteur pour recevoir l'entrée de radiomessagerie dans le second format, le décodeur de radiomessagerie décodant l'entrée de radiomessagerie dans le second format pour donner un signal de train de bits de radiomessagerie ; et
un processeur (20) de données comprenant :
une interface (22) destinée à recevoir le train de bits de radiomessagerie ;
une unité centrale de traitement (28) destinée à délivrer un signal de commande en réponse au train de bits de radiomessagerie, l'unité centrale de traitement (28) étant raccordée à l'interface (22) pour recevoir le train de bits de radiomessagerie ;
le système (10) de traitement de données étant **caractérisé :**
**par** un registre (26) de commande raccordé à l'interface pour recevoir le train de bits de radiomessagerie, le registre de commande fournissant une clé de sécurité en réponse à une première partie du train de bits de radiomessagerie ;
par une mémoire (30) destinée à mémoriser une seconde partie du train de bits de radiomessagerie, la mémoire étant raccordée à l'interface pour recevoir le train de bits de radiomessagerie ;
par un codeur (32) de sécurité raccordé au registre de commande pour recevoir la clé de sécurité, à l'unité centrale de traitement pour recevoir un signal central de commande, et à la mémoire pour recevoir la seconde partie du train de bits de radiomessagerie, le codeur de sécurité codant la seconde partie du train de bits de radiomessagerie et la clé de sécurité pour engendrer un signal codé ;
par un décodeur (38) destiné à décoder le signal codé pour fournir sélectivement un signal de commande d'instruction ; et
par une unité (34) de traitement d'instruction raccordée à l'interface pour recevoir le train de bits de radiomessagerie et raccordée au décodeur pour recevoir le signal de commande d'instruction, l'unité (34) de traitement d'instruction engendrant sélectivement une pluralité de signaux externes d'instruction en réponse au signal de commande d'instruction, la pluralité de signaux externes d'instruction fournissant une commande externe de la fonctionnalité d'un dispositif externe.

2. Système de traitement de données selon la revendication 1, dans lequel l'entrée de radiomessagerie dans le premier format comprend une valeur de commande incorporée dans le train de bits de radiomessagerie.

3. Système de traitement de données selon la revendication 2, dans lequel le codeur (32) de sécurité est apte à engendrer sélectivement le signal de commande d'instruction en réponse à la valeur de commande incorporée dans le train de bits de radiomessagerie.

4. Système de traitement de données selon la revendication 1, dans lequel le codeur (32) de sécurité est apte à engendrer le signal codé en chaînant la clé de sécurité avec la seconde partie du train de bits de radiomessagerie.

5. Procédé de réalisation d'une commande à distance en utilisant un téléavertisseur, comprenant les étapes consistant :
à prévoir un récepteur (12) pour recevoir une entrée de radiomessagerie dans un premier format, le récepteur traduisant l'entrée de radiomessagerie- en un second format ;
à raccorder un décodeur (14) de radiomessagerie au récepteur pour recevoir l'entrée de radiomessagerie dans le second format, le décodeur de radiomessagerie décodant l'entrée de radiomessagerie dans le second format pour donner un signal de train de bits de radiomessagerie ;
à prévoir une interface (22) pour recevoir le train de bits de radiomessagerie ;
à prévoir une unité centrale de traitement (28) pour fournir un signal de commande en réponse au train de bits de radiomessagerie, l'unité centrale de traitement (28) étant raccordée à l'interface (22) pour recevoir le train de bits de radiomessagerie ;
le procédé étant **caractérisé par** le fait :
de raccorder un registre (26) de commande à l'interface pour recevoir le train de bits de radiomessagerie, le registre de commande fournissant une clé de sécurité en réponse à une première partie du train de bits de radiomessagerie ;
de prévoir une mémoire (30) pour mémoriser une seconde partie du train de bits de radiomessagerie, la mémoire étant raccordée à l'interface pour recevoir le train de bits de radiomessagerie ;
de raccorder un codeur (32) de sécurité au registre de commande pour recevoir la clé de sécurité, à l'unité centrale de traitement pour recevoir un signal central de commande, et à la mémoire pour recevoir la seconde partie du train de bits de radiomessagerie, le codeur de sécurité codant la seconde partie du train de bits de radiomessagerie et la clé de sécurité pour engendrer un signal codé ;
de prévoir un décodeur (38) pour décoder le signal codé pour fournir sélectivement un signal de commande d'instruction ; et
de raccorder une unité (34) de traitement d'instruction à l'interface pour recevoir le train de bits de radiomessagerie et au décodeur pour recevoir le signal de commande d'instruction, le traitement d'instruction engendrant sélectivement une pluralité de signaux externes d'instruction en réponse au signal de commande d'instruction, la pluralité de signaux externes d'instruction fournissant une commande externe de la fonctionnalité d'un dispositif externe.
